(19) Europäisches Patentamt
European Patent Office
Office européen des brevets

(11) EP 2 026 400 B1

(12) FASCICULE DE BREVET EUROPEEN

(45) Date de publication et mention
de la délivrance du brevet:
**03.02.2010 Bulletin 2010/05**

(51) Int Cl.:
***H01M 8/10*** *(2006.01)*

(21) Numéro de dépôt: **08354044.3**

(22) Date de dépôt: **23.06.2008**

(54) **Procédé de fabrication d'une pile à combustible sur un support poreux**

Verfahren zur Herstellung einer Brennstoffzelle auf einem porösen Untergrund

Method of manufacturing a fuel cell on a porous medium

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **02.08.2007 FR 0705652**

(43) Date de publication de la demande:
**18.02.2009 Bulletin 2009/08**

(73) Titulaire: **COMMISSARIAT A L'ENERGIE ATOMIQUE**
**75015 Paris (FR)**

(72) Inventeurs:
• **Faucheux, Vincent**
**38250 Lans en Vercors (FR)**

• **Laugier, Christelle**
**38140 Rives (FR)**
• **Laurent, Jean-Yves**
**38420 Domène (FR)**
• **Martin, Steve**
**38160 Saint-Sauveur (FR)**

(74) Mandataire: **Hecké, Gérard et al**
**Cabinet Hecké**
**10, rue d'Arménie**
**Europole**
**BP 1537**
**38025 Grenoble Cedex 1 (FR)**

(56) Documents cités:
**EP-A- 1 353 394        EP-A- 1 772 921**
**FR-A- 2 846 797        FR-A- 2 880 200**
**US-A1- 2007 072 070**

EP 2 026 400 B1

## Description

### Domaine technique de l'invention

L'invention concerne un procédé de fabrication d'une pile à combustible comprenant au moins la formation d'un ensemble constitué par une première électrode, une membrane solide conductrice de protons et une seconde électrode sur un support comportant des pores délimités par des parois, la membrane étant formée par dépôt et séchage d'un électrolyte liquide.

### État de la technique

Les piles à combustible et plus particulièrement les micropiles à combustible sont réalisées par dépôt successif, sur un support, d'un ensemble Electrode-Membrane- Electrode, également appelé ensemble EME, empilement EME ou coeur de pile. Ledit support sert de maintien mécanique à l'empilement et il permet, grâce à sa porosité, d'alimenter ledit ensemble EME en fluide réactif et plus particulièrement en combustible, par exemple de l'hydrogène, des vapeurs d'éthanol ou de méthanol.

Il existe, par ailleurs, un besoin croissant de piles à combustible ayant des densités de puissance élevées. Pour cela, l'épaisseur de la membrane conductrice protonique doit être très faible, typiquement de l'ordre de 5 à 10 micromètres. De plus, la formation d'une membrane homogène de 5 à 10 micromètres d'épaisseur sur un support poreux nécessite que ledit support présente une taille de pores inférieure à cette épaisseur.

Or, une telle diminution des dimensions des constituants d'une pile à combustible provoque des problèmes de capillarité. En effet, la membrane solide conductrice protonique, généralement constituée par un polymère conducteur protonique d'acide perfluorosulfonique, tel que le produit commercialisé par la société Dupont de Nemours sous le nom Nafion®, est obtenue en déposant un film liquide (ou électrolyte liquide), qui est, ensuite, durci par séchage. Or, lors du dépôt de l'électrolyte liquide, celui-ci risque de pénétrer dans les pores du support poreux sous l'effet des forces capillaires. Il y a, ainsi, un risque d'obstruer les pores du support et donc de bloquer le passage du fluide réactif.

### Objet de l'invention

L'invention a pour but un procédé de fabrication d'une pile à combustible permettant d'éviter la pénétration d'électrolyte solide dans le support poreux lors de la formation de la membrane solide conductrice de protons, tout en conservant et éventuellement en augmentant la densité de puissance de ladite pile.

Selon l'invention, ce but est atteint par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

- la figure 1 représente, schématiquement et en coupe, un mode particulier d'une pile à combustible, formée sur un support poreux.
- les figures 2 à 4 illustrent, schématiquement et en coupe, différentes étapes de formation d'un film sur les parois délimitant les pores d'un support poreux, dans un procédé de fabrication d'une pile selon la figure 1.
- les figures 5 et 6 représentent, schématiquement et en coupe, deux variantes de réalisation d'un support poreux.

### Description de modes particuliers de réalisation

Pour éviter la pénétration de l'électrolyte liquide dans le support poreux, tout en conservant ou en augmentant la densité de puissance de la pile à combustible, au moins une partie des parois délimitant les pores du support est recouverte, avant le dépôt de l'électrolyte liquide, par un film constitué par un matériau présentant, avec une goutte dudit électrolyte liquide, un angle de contact θ supérieur à 90°. De plus, ledit film présente une épaisseur autorisant le passage du fluide réactif dans les pores du support.

En effet, selon l'équation de Laplace, la pression capillaire, qui provoque la pénétration d'un liquide dans un matériau poreux, est proportionnelle à :

$$\sigma * cos\theta / R$$

avec :

- σ: viscosité du liquide déposé,
- θ : angle de contact entre la goutte de liquide et le matériau poreux, également appelé angle de goutte. Un tel angle est mesuré à l'interface entre un liquide et une surface plane d'un corps solide lorsqu'une goutte dudit liquide est déposée sur ladite surface et il détermine le degré de mouillabilité d'un liquide avec un corps solide
- et R : rayon ou taille des pores du matériau poreux.

Ainsi, la pression capillaire est inversement proportionnelle à la taille des pores d'un matériau poreux. Plus les pores sont petits, plus la pression capillaire est élevée et plus la pénétration de l'électrolyte liquide est favorisée. Or, pour empêcher la pénétration de l'électrolyte liquide dans le support poreux, la taille des pores ne peut pas être augmentée. En effet, la taille des pores du support poreux doit, au contraire, être diminuée pour obtenir des densités de puissance élevées.

Cependant, la pression capillaire est également fonction de l'angle de contact θ entre la goutte de liquide et le matériau poreux. Par conséquent, pour éviter la pénétration de l'électrolyte liquide dans le matériau poreux, la pression capillaire peut être diminuée en obtenant une valeur de cosθ négative, c'est-à-dire un angle de contact θ supérieur à 90°, ce qui implique qu'une goutte de l'électrolyte liquide ne mouille pas à la surface du support poreux. À titre de comparaison, une surface est dite hydrophobe, si elle présente un angle de contact θ supérieur à 90° avec une goutte d'eau.

Le support poreux est, plus particulièrement, élaboré à partir d'une céramique, d'un verre, d'un métal, de silicium, de carbure de silicium, de carbone graphite ou de toute association de ces matériaux. Les pores du support peuvent être formés par les espaces libres formés entre les grains d'un matériau fritté, par exemple choisi parmi les céramiques, le verre, le carbure de silicium et un métal. Le support poreux peut, aussi, être constitué par des fibres, par exemple en verre, en carbone ou en polymère, et les espaces libres disposés entre lesdites fibres constituent les pores dudit support. Selon une variante de réalisation, les pores du support peuvent également être formés par gravure ou perçage d'un matériau massif tel que le silicium, un métal ou du verre. Les pores peuvent être de forme quelconque ou, au contraire, ils peuvent avoir une forme structurée, par exemple sous la forme de canaux traversants. Or, les propriétés de surface des matériaux utilisés pour former le support poreux ne permettent pas de maintenir l'électrolyte liquide utilisé pour former la membrane solide conductrice de protons, à la surface dudit support.

Ainsi, un matériau présentant, avec l'électrolyte liquide, un angle de contact θ supérieur à 90° est déposé sur au moins une partie et avantageusement sur la totalité des parois délimitant les pores du support, avant le dépôt de l'électrolyte liquide. Ceci permet de modifier l'angle de contact entre l'électrolyte liquide et les parois délimitant les pores du support, et donc de diminuer la pression capillaire, de manière à assurer le maintien de l'électrolyte liquide à la surface du support poreux.

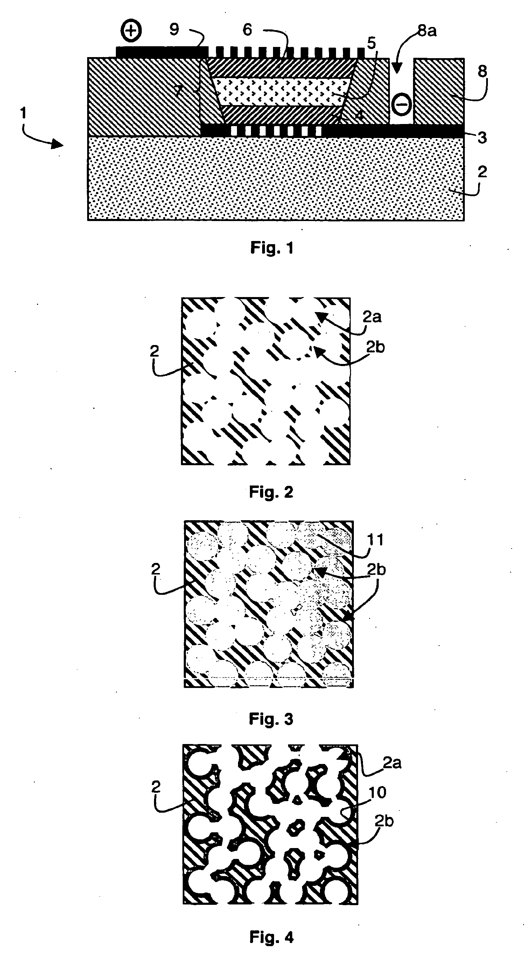

À titre d'exemple, la figure 1 représente un mode particulier de réalisation d'une pile à combustible 1. Une partie d'un support poreux 2 est recouverte par un collecteur de courant anodique 3, lui-même en partie recouvert par un empilement successif de trois couches minces constituant respectivement une anode 4, une membrane 5 par exemple en Nafion® et une cathode 6. L'empilement desdites trois couches minces constitue, ainsi, l'assemblage EME 7. Une couche mince isolante 8 recouvre, de plus, les parties libres respectives du support poreux 2 et du collecteur de courant anodique 3 et elle entoure la périphérie de l'assemblage EME 7. Ladite couche mince isolante 8 comporte, cependant, une ouverture 8a, libérant une zone du collecteur de courant anodique 3 pour permettre la formation d'une borne de connexion négative. Enfin, un collecteur de courant cathodique 9 recouvre la cathode 6 et une partie de la couche mince isolante 8 et une borne de connexion positive peut être formée sur le collecteur de courant cathodique 9. De plus, ladite membrane 5 a, avantageusement, une épaisseur comprise entre 5 et 10 micromètres.

Le film recouvrant les parois délimitant les pores peut être constitué par un matériau comportant au moins un polymère présentant, avec une goutte de l'électrolyte liquide utilisé pour former la membrane électrolytique 5, un angle de contact θ supérieur à 90°. Plus particulièrement, le matériau est constitué par un tel polymère. Le polymère est, par exemple, choisi, parmi :

- le polytétrafluoroéthylène (PTFE) et ses dérivés,
- l'éthylène propylène fluoré (FEP),
- le polyfluorure de vinylidène (PVDF) et ses dérivés,
- le polyéthylène (PE),
- le polypropylène (PP),
- l'éthylène-propylène
- et les thiols.

Le polymère peut également être un polymère conducteur protonique d'acide perfluorosulfonique, tel que le Nafion® ou le Hyflon® ION commercialisé par la société Solvay Solexis. En effet, l'angle de contact θ, entre la surface d'un film en Nafion® (ou en Hyflon® ION) et une goutte d'un électrolyte liquide destiné à former une membrane solide en Nafion® (ou en Hyflon® ION) est supérieur à 90°.

Plus particulièrement, l'angle de contact entre les polymères mentionnés ci-dessus et un électrolyte liquide, tel que le Nafion® ou le Hyflon® ION, est compris entre 130° et 150°.

Or, bien que ces matériaux présentent les propriétés de surface adaptées pour maintenir l'électrolyte à la surface du support poreux, ils sont très mauvais d'un point de vue conduction thermique. Ainsi, ils ne peuvent pas être utilisés en tant que matériau constituant le support poreux car une telle utilisation provoquerait une surchauffe et l'arrêt de la pile à combustible.

Ainsi, le matériau comprenant au moins un polymère est formé sur les parois délimitant les pores du support, plus particulièrement par imprégnation par vole liquide. Le support est imprégné par une solution liquide comportant au moins un solvant dans lequel est dissous ledit matériau. Puis, le(s) solvant(s) est(sont) évaporé(s) afin que le matériau préalablement dissous se dépose, sous une forme solide, sur lesdites parois.

À titre d'exemple, les figures 2 à 4 illustrent schématiquement les différentes étapes de formation d'un film polymère 10, sur les parois délimitant les pores d'un support 2, lors d'un procédé de fabrication d'une pile à combustible 1 telle que celle représentée sur la figure 1. Dans ce mode de réalisation, le film 10 est formé en imprégnant le support 2 par une solution liquide 11 comportant un solvant et ledit matériau. Ainsi, comme représenté sur les figures 2 et 3, le support poreux 2, comportant des pores 2a délimités par des parois 2b, est imprégné par la solution 11. Celle-ci pénètre, alors, dans les pores 2a dudit support 2 et les remplit totalement. Puis, comme représenté sur la figure 4, une étape d'évaporation permet d'éliminer le solvant, de sorte que le matériau se dépose sur les parois 2b du support et forme le film 10. Le solvant composant la solution 11 est, par exemple, évaporé sous vide et/ou par chauffage. Le solvant peut, par exemple, être de l'eau et/ou un ou plusieurs alcools. De plus, la température d'évaporation du solvant est inférieure à la température à laquelle le matériau est susceptible de se dégrader ou d'être endommagé (selon les cas, température de fusion, de transition vitreuse...).

La quantité de matériau dans la solution 11 doit être suffisante pour que les parois des pores soient recouvertes d'un film 10 ayant une épaisseur suffisante, par exemple supérieure à 1 nm. Cependant, l'épaisseur du film ne doit pas être trop importante, car le film 10 ne doit pas boucher les pores 2a et donc bloquer le passage ou la diffusion du fluide réactif.

Une fois le film 10 déposé, le collecteur de courant anodique 3, l'anode 4, la membrane 5, la cathode 6, le collecteur de courant cathodique 9 et la couche isolante 8 sont formés sur ledit support, sans qu'il y ait un risque de pénétration de l'électrolyte liquide dans les pores du support. La membrane 5 est formée par dépôt d'un électrolyte liquide, par exemple par enduction, par revêtement par pulvérisation, par un système de délivrance micrométrique également connu sous le terme anglo-saxon « micro-dispensing », par dépôt par jet d'encre ; puis par séchage dudit électrolyte liquide.

Dans une variante de réalisation, le collecteur de courant anodique 3 et l'anode 4 peuvent être déposés sur le support poreux 2, avant la formation du film 10. Ce mode de réalisation n'est adapté qu'au cas où le matériau formant le film 10 comporte un polymère conducteur de protons d'acide perfluorosulfonique, tel que le Nafion® ou le Hyflon® ION. En effet, dans ce cas, même si l'anode comporte des résidus de polymère, ceux-ci ne gênent pas le passage des protons entre l'anode et l'électrolyte. De plus, la présence de ce polymère sur les parois des pores de l'anode permet de créer une interface volumique entre l'anode et l'électrolyte et non une interface surfacique.

À titre d'exemple, une solution liquide comportant 95% de solvant (eau + alcools) et 5% de Nafion® a été utilisée pour imprégner, par exemple par enduction, un support poreux en céramique, par exemple en alumine. L'étape d'imprégnation a été réalisée après le dépôt d'un collecteur de courant anodique formé, par exemple, par une couche en or d'une épaisseur de 1μm, et le dépôt d'une anode constituée, par exemple, d'une couche en carbone sur platine de 5μm d'épaisseur. Le support poreux en céramique a une épaisseur de 500 micromètres, avec une taille moyenne de pores de l'ordre de 5 micromètres et une fraction volumique de pores de 50%. Ainsi, 1 cm$^2$ de surface de céramique poreuse comporte un volume total des pores représentant 25 mm$^3$. Ainsi, 25 mm$^3$/cm$^2$ de solution liquide sont donc nécessaires pour imprégner le volume total des pores. Le solvant est, ensuite, évaporé, pendant 1 heure, à 85°C dans un four de sorte que le Nafion® se dépose sur les parois délimitant les pores. Après l'évaporation du solvant, l'épaisseur du film en Nafion® est de l'ordre de 40 nm. Cette épaisseur permet d'éviter tout problème de diffusion en fluide réactif et, plus particulièrement en hydrogène puisque aucun pore n'est obstrué par la présence dudit film. L'électrolyte liquide est, ensuite, déposé par enduction et séché pour obtenir, par exemple une membrane solide en Nafion®. Après formation de la cathode et du collecteur de courant cathodique, la pile à combustible a été testée. La puissance obtenue n'indique aucun problème de diffusion en hydrogène, contrairement à une pile réalisée dans les mêmes conditions mais réalisée sans formation d'un film recouvrant les parois délimitant les pores du support.

Selon une alternative, au lieu de contenir le matériau destiné à former le film 10, la solution 10 peut contenir un précurseur dudit matériau.

Ainsi, pour un film 10 contenant un polymère ayant, avec une goutte de l'électrolyte liquide utilisé pour former la membrane 5, un angle de contact θ supérieur à 90°, la solution 10 utilisée pour l'imprégnation peut contenir un monomère dudit polymère. Dans ce cas, ledit monomère est polymérisé par tout type de moyen adapté, avant évaporation du solvant, de sorte que l'angle de contact θ du polymère obtenu par polymérisation soit supérieur à 90°.

De même, le précurseur dudit matériau peut être un composé présentant des propriétés de surface capable d'être modifiées sous l'action d'un traitement thermique, ultraviolet ou infrarouge. Plus particulièrement, l'angle de contact θ dudit composé avec une goutte de l'électrolyte liquide ne devient supérieur à 90° qu'après avoir subit un traitement tel qu'un traitement thermique, infrarouge ou ultraviolet. C'est, par exemple, le cas des thiols dont l'angle de contact peut être modifié sous traitement infrarouge ou ultraviolet. Dans ce cas, un tel traitement est réalisé après l'étape d'évaporation du solvant.

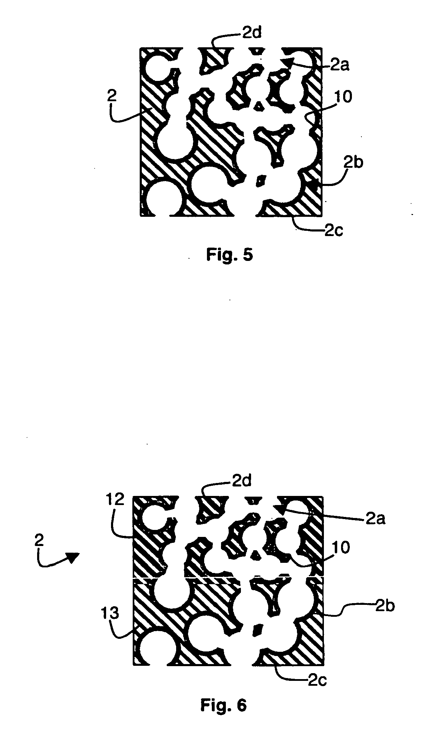

Sur les figures 2 à 4, le support 2 est un support constitué par un seul matériau et la taille des pores 2a dans le support 2 est sensiblement constante. Elle est, avantageusement, inférieure à l'épaisseur de la membrane conductrice de protons et, plus particulièrement, inférieure à 10 micromètres. Par contre, il peut être avantageux d'avoir un support présentant un gradient de porosité, c'est-à-dire une porosité variant en fonction de l'épaisseur du support. Plus particulièrement, comme représenté sur la figure 5, le support 2 comporte deux surfaces 2c et 2d opposées, la surface 2d étant destinée à recevoir l'ensemble EME. De plus, la porosité dans le support 2 est décroissante de la surface 2c jusqu'à la surface 2d. En effet, sur la figure 5, les pores disposés à proximité de la surface 2c ont une taille supérieure à celle des pores disposés à proximité de la surface 2d.

Avantageusement, les pores disposés à proximité de la surface 2c ont une taille supérieure à l'épaisseur de la membrane conductrice de protons (par exemple 10 micromètres) tandis que les pores disposés à proximité de la surface 2d ont une taille moyenne inférieure à l'épaisseur de la membrane conductrice protonique. Un tel gradient de porosité permet, en effet, de diminuer les forces capillaires et donc de favoriser le maintien de l'électrolyte liquide en surface du support poreux. De préférence, dans le cas de pores réalisés par structuration (par exemple gravure ou perçage), tels que des pores ayant une forme de canaux traversants, ces derniers ont avantageusement une forme tronconique évasée vers la surface 2c.

Selon une variante de réalisation et comme représenté sur la figure 6, le support peut être constitué d'un empilement de deux couches superposées 12 et 13, ayant des porosités distinctes, respectivement inférieure et supérieure à l'épaisseur de la membrane conductrice de protons (par exemple 10 micromètres). Les deux couches superposées 12 et 13 peuvent être constituées par des matériaux distincts ou bien par un même matériau mais ayant deux porosités de formes différentes. À titre d'exemple, la couche 13 peut comporter des canaux traversants créant une première porosité tandis que la couche 12 peut présenter des pores de forme quelconque mais de taille inférieure à celle de la couche 13.

Le ou les polymères utilisés pour former le film 10 peuvent être remplacés par d'autres matériaux ayant, avec une goutte de l'électrolyte liquide utilisé pour former la membrane solide, un angle de contact θ supérieur à 90°. À titre d'exemple, le matériau formant le film 10 peut être constitué par des particules métalliques, céramiques ou en carbone graphite, présentant un angle de contact, avec une goutte de l'électrolyte liquide, supérieur à 90°. Le film 10 est, par exemple, formé par dépôt chimique en phase vapeur (CVD), dépôt physique en phase vapeur (PVD), sédimentation, bain, enduction, par revêtement par pulvérisation (« spray coating »). Par ailleurs, si lesdites particules ne présentent pas elles-mêmes un angle de contact θ supérieur à 90°, ces particules peuvent être recouvertes par un revêtement formé par un polymère présentant, avec une goutte dudit électrolyte liquide, un angle de contact supérieur à 90°.

Ainsi, la formation du film 10 n'est pas limitée à la technique de l'imprégnation par voie liquide. Plus particulièrement, le film 10 peut être déposé sur au moins une partie des parois délimitant les pores du support, par un procédé de dépôt chimique en phase vapeur (CVD), tel que le dépôt chimique en phase vapeur assisté par plasma (PECVD) ou le dépôt chimique en vapeur à partir de précurseurs organométallique (MOCVD). Le matériau constituant le film 10 peut, par exemple, être de l'oxycarbure de silicium (SiOC), du polydiméthylsiloxane (PDMS) ou du carbone amorphe. En effet, l'angle de contact formé par une goutte d'électrolyte liquide sur une surface plane d'un tel matériau est supérieur à 90° et avantageusement compris entre 130° et 170°. Cette technique de dépôt CVD permet, en particulier, de déposer un film conforme par décomposition chimique en phase gazeuse, c'est-à-dire un film ayant une épaisseur constante. Par ailleurs, elle présente l'avantage de pouvoir infiltrer des gaz à l'intérieur d'un matériau poreux. Par conséquent, un film mince 10 peut être directement réalisé autour de chaque pore du support poreux, sans nécessiter d'imprégnation préalable par voie liquide et d'étape d'évaporation du solvant.

## Revendications

**1.** Procédé de fabrication d'une pile à combustible (1) comprenant au moins la formation d'un ensemble (7) constitué par une première électrode (4), une membrane solide conductrice de protons (5) et une seconde électrode (6) sur un support (2) comportant des pores (2a) délimités par des parois (2b), la membrane (5) étant formée par dépôt et séchage d'un électrolyte liquide,
**caractérisé en ce qu'**un film (10), constitué par un matériau présentant, avec une goutte dudit électrolyte liquide, un angle de contact (θ) supérieur à 90°, est formé, avant le dépôt de l'électrolyte liquide, sur au moins une partie des parois (2b) délimitant les pores (2a), ledit film (10) ayant une épaisseur autorisant le passage d'un fluide réactif dans lesdits pores (2a).

**2.** Procédé selon la revendication 1, **caractérisé en ce que** le matériau constituant ledit film (10) comporte au moins un polymère présentant, avec une goutte dudit électrolyte liquide, un angle de contact (θ) supérieur à 90°.

**3.** Procédé selon la revendication 2, **caractérisé en ce que** le polymère est choisi parmi le groupe constitué par :

- le polytétrafluoroéthylène et ses dérivés,
- l'éthylène propylène fluoré,
- le polyfluorure de vinylidène et ses dérivés,
- le polyéthylène,
- le polypropylène,
- l'éthylène-propylène,
- les thiols,
- et un polymère conducteur protonique d'acide perfluorosulfonique.

**4.** Procédé selon la revendication 3, **caractérisé en ce que** le polymère étant un polymère conducteur protonique d'acide perfluorosulfonique, la première électrode est réalisée avant la formation du film (10).

**5.** Procédé selon l'une quelconque des revendications 2 à 4, **caractérisé en ce que** ledit film (10) est formé en imprégnant ledit support (2) par une solution liquide (11) comportant au moins un solvant dans lequel est dissous ledit matériau, puis en évaporant ledit solvant.

**6.** Procédé selon l'une quelconque des revendications 2 à 4, **caractérisé en ce que** ledit film (10) est formé en imprégnant ledit support (2) par une solution liquide (11) comportant au moins un solvant dans lequel est dissous au moins un précurseur dudit matériau puis en évaporant ledit solvant.

**7.** Procédé selon la revendication 6, **caractérisé en ce que** ledit précurseur est constitué d'un monomère présentant, après polymérisation, un angle de contact ($\theta$), avec une goutte dudit électrolyte liquide, supérieur à 90°.

**8.** Procédé selon la revendication 6, **caractérisé en ce que** le précurseur dudit matériau est un composé présentant, après traitement thermique, ultraviolet ou infrarouge, un angle de contact ($\theta$), avec une goutte dudit électrolyte liquide, supérieur à 90°, ledit traitement étant réalisé après l'évaporation du solvant.

**9.** Procédé selon la revendication 1, **caractérisé en ce que** le matériau formant ledit film (10) est constitué par des particules métalliques, céramiques ou en carbone graphite, présentant, avec une goutte de l'électrolyte liquide un angle de contact ($\theta$), supérieur à 90°.

**10.** Procédé selon la revendication 1, **caractérisé en ce que** le matériau formant ledit film (10) est constitué par des particules métalliques, céramiques ou en carbone graphite, recouvertes par un revêtement formé par un polymère présentant, avec une goutte dudit électrolyte liquide, un angle de contact ($\theta$) supérieur à 90°.

**11.** Procédé selon la revendication 1, **caractérisé en ce que** le film est formé par dépôt chimique en phase vapeur.

**12.** Procédé selon l'une quelconque des revendications 1 à 11, **caractérisé en ce que** le support, muni de première et seconde surfaces (2c, 2d) opposées, présente une porosité décroissante de la première surface (2c) jusqu'à la seconde surface (2d), l'ensemble (7) constitué par la première électrode (4), la membrane solide conductrice de protons (5) et la seconde électrode (6) étant formé sur la seconde surface (2d) dudit support.

**13.** Procédé selon la revendication 12, **caractérisé en ce que** le support (2) est constitué d'un empilement de deux couches superposées (12, 13), ayant des porosités distinctes, respectivement inférieure et supérieure à l'épaisseur de la membrane solide conductrice de protons (5).

## Claims

**1.** A method for fabricating a fuel cell (1) comprising at least formation of an assembly (7) formed by a first electrode (4), a solid proton-conducting membrane (5) and a second electrode (6) on a support (2) comprising pores (2a) delineated by walls (2b), the membrane (5) being formed by deposition and drying of a liquid electrolyte,

**characterized in that** a film (10), formed by a material presenting a contact angle ($\theta$) of more than 90° with a drop of said liquid electrolyte, is formed on at least a part of the walls (2b) delineating the pores (2a) before deposition of the liquid electrolyte, said film (10) having a thickness enabling a reactive fluid to pass in said pores (2a).

**2.** The method according to claim 1, **characterized in that** the material forming said film (10) comprises at least one polymer presenting a contact angle ($\theta$) of more than 90° with a drop of said liquid electrolyte.

**3.** The method according to claim 2, **characterized in that** the polymer is chosen from the group formed by:

- polytetrafluorethylene and its derivatives,
- fluorinated ethylene-propylene,
- polyvinylidene fluoride and its derivatives,
- polyethylene,
- polypropylene,
- ethylene-propylene
- thiols,
- and a perfluorosulfonic acid proton-conducting polymer.

**4.** The method according to claim 3, **characterized in that** the polymer being a perfluorosulfonic acid proton-conducting polymer, the first electrode is produced before formation of the film (10).

**5.** The method according to any one of claims 2 to 4, **characterized in that** said film (10) is formed by impregnating said support (2) with a liquid solution (11) comprising at least a solvent in which said material is dissolved, and then by evaporating said solvent.

**6.** The method according to any one of claims 2 to 4, **characterized in that** said film (10) is formed by impregnating said support (2) with a liquid solution (11) comprising at least one solvent in which at least one precursor of said material is dissolved, and then by evaporating said solvent.

**7.** The method according to claim 6, **characterized in that** said precursor is formed by a monomer presenting a contact angle (θ) of more than 90° with a drop of said electrolyte liquid, after polymerization.

**8.** The method according to claim 6, **characterized in that** the precursor of said material is a compound presenting a contact angle (θ) of more than 90° with a drop of said liquid electrolyte, after thermal, ultraviolet or infrared treatment, said treatment being performed after evaporation of the solvent.

**9.** The method according to claim 1, **characterized in that** the material forming said film (10) is constituted by metallic, ceramic or graphite carbon particles presenting a contact angle (θ) of more than 90° with a drop of the liquid electrolyte.

**10.** The method according to claim 1, **characterized in that** the material forming said film (10) is constituted by metallic, ceramic or graphite carbon particles covered with a coating formed by a polymer presenting a contact angle (θ) of more than 90° with a drop of the liquid electrolyte.

**11.** The method according to claim 1, **characterized in that** the film is formed by chemical vapor deposition.

**12.** The method according to claim 1, **characterized in that** the support, provided with opposite first and second surfaces (2c, 2d), presents a decreasing porosity from the first surface (2c) to the second surface (2d), the assembly (7) formed by the first electrode (4), the solid proton-conducting membrane (5) and the second electrode (6) being formed on the second surface (2d) of said support.

**13.** The method according to claim 12, **characterized in that** the support (2) is formed by a stack of two superposed layers (12, 13) having different porosities respectively smaller and larger than the thickness of the solid proton-conducting membrane (5).

**Patentansprüche**

**1.** Verfahren zur Herstellung einer Brennstoffzelle (1), das mindestens die Herstellung einer Anordnung (7) umfasst, die aus einer ersten Elektrode (4), einer Protonen leitenden Feststoffmembran (5) und einer zweiten Elektrode (6) auf einem Substrat (2) besteht, das Poren (2a) aufweist, die von Wänden (2b) begrenzt werden, wobei die Membran (5) durch Abscheidung und Trocknung eines flüssigen Elektrolyten gebildet wird,
**dadurch gekennzeichnet, dass** eine dünne Schicht (10), die aus einem Material besteht, das mit einem Tropfen des genannten flüssigen Elektrolyten einen Kontaktwinkel (9) größer 90° aufweist, vor dem Abscheiden des flüssigen Elektrolyten auf mindestens einem Teil der Wände (2b) gebildet wird, welche die Poren (2a) begrenzen, welche dünne Schicht (10) eine Dicke hat, die den Durchfluss eines reaktiven Fluids in die Poren (2a) erlaubt.

**2.** Verfahren nach Anspruch 1, **dadurch gekennzeichnet, dass** das Material, das die dünne Schicht (10) bildet, mindestens ein Polymer umfasst, das mit einem Tropfen des flüssigen Elektrolyten einen Kontaktwinkel (6) größer 90° hat.

**3.** Verfahren nach Anspruch 2, **dadurch gekennzeichnet, dass** das Polymer aus der Gruppe ausgewählt ist, die umfasst:

- Polytetrafluorethylen und dessen Derivate,
- fluoriertes Propylenethylen,
- Vinylidenpolyfluorid und dessen Derivate,
- Polyethylen,
- Polypropylen,
- Propylenethylen,
- Thioalkohole,
- und ein Protonen leitendes Perfluorsulfonsäure-Polymer.

**4.** Verfahren nach Anspruch 3, **dadurch gekennzeichnet, dass**, nachdem das Polymer ein Protonen leitendes Perfluorsulfonsäure-Polymer ist, die erste Elektrode vor der Herstellung der dünnen Schicht (10) hergestellt wird.

**5.** Verfahren nach einem der Ansprüche 2 bis 4, **dadurch gekennzeichnet, dass** die dünne Schicht (10) durch Imprägnierung des genannten Substrats (2) mit einer flüssigen Lösung (11), die mindestens ein Lösungsmittel enthält, in dem das genannte Material gelöst ist, und dann durch Verdampfung des Lösungsmittels hergestellt wird.

**6.** Verfahren nach einem der Ansprüche 2 bis 4, **dadurch gekennzeichnet, dass** die dünne Schicht (10) durch Imprägnierung des Substrats (2) mit einer flüssigen Lösung (11), die mindestens ein Lösungsmittel enthält, in dem mindestens ein Zwischenstoff des genannten Materials gelöst ist, und dann durch Verdampfung des genannten Lösungsmittels hergestellt wird.

**7.** Verfahren nach Anspruch 6, **dadurch gekennzeichnet, dass** der Zwischenstoff von einem Monomer gebildet wird, das nach Polymerisation einen Kontaktwinkel (9) mit einem Tropfen des genannten flüssigen Elektrolyten von über 90° hat.

**8.** Verfahren nach Anspruch 6, **dadurch gekennzeichnet, dass** der Zwischenstoff des genannten Materials eine Verbindung ist, die nach einer Wärmebehandlung - UV- oder Infrarotbehandlung - einen Kontaktwinkel (9) mit einem Tropfen des genannten flüssigen Elektrolyten von über 90° hat, wobei die Behandlung nach Verdampfung des Lösungsmittels vorgenommen wird.

9. Verfahren nach Anspruch 1, **dadurch gekennzeichnet, dass** das Material, das die dünne Schicht (10) bildet, von Metall-, Keramik- oder Graphitkohlepartikeln gebildet wird und mit einem Tropfen des flüssigen Elektrolyten einen Kontaktwinkel (6) von über 90° hat.

10. Verfahren nach Anspruch 1, **dadurch gekennzeichnet, dass** das Material, das die dünne Schicht (10) bildet, von Metall-, Keramik- oder Graphitkohlepartikeln gebildet wird, die von einer Schicht bedeckt sind, die von einem Polymer gebildet wird, das mit einem Tropfen des flüssigen Elektrolyten einen Kontaktwinkel (6) von über 90° hat.

11. Verfahren nach Anspruch 1, **dadurch gekennzeichnet, dass** die dünne Schicht durch Gasphasenabscheidung hergestellt wird.

12. Verfahren nach einem der Ansprüche 1 bis 11, **dadurch gekennzeichnet, dass** das Substrat, das mit einer ersten und einer zweiten Oberfläche (2c, 2d) versehen ist, die entgegengesetzt zueinander liegen, eine abnehmende Porosität von der ersten Oberfläche (2c) zur zweiten Oberfläche (2d) hin aufweist, wobei die Anordnung (7) aus erster Elektrode (4), Protonen leitender Feststoffmembran (5) und zweiter Elektrode (6) auf der zweiten Oberfläche (2d) des Substrats gebildet wird.

13. Verfahren nach Anspruch 12, **dadurch gekennzeichnet, dass** das Substrat (2) von einer Aufschichtung zweier übereinander gelagerter Schichten (12, 13) mit unterschiedlichen Porositäten gebildet wird, die jeweils dünner bzw. dicker als die Protonen leitende Feststoffmembran (5) sind.

Fig. 1

Fig. 2

Fig. 3

Fig. 4

**Fig. 5**

**Fig. 6**